(19) Europäisches Patentamt
European Patent Office
Office européen des brevets

(11) **EP 3 841 888 A1**

(12) **EUROPEAN PATENT APPLICATION**
published in accordance with Art. 153(4) EPC

(43) Date of publication:
**30.06.2021 Bulletin 2021/26**

(21) Application number: **19851497.8**

(22) Date of filing: **17.07.2019**

(51) Int Cl.:
**A23L 2/00** (2006.01)        **A23C 7/00** (2006.01)
**A23F 3/16** (2006.01)        **A23F 5/24** (2006.01)
**A47J 31/46** (2006.01)        **C12G 1/00** (2019.01)
**C12G 3/00** (2019.01)

(86) International application number:
**PCT/JP2019/028126**

(87) International publication number:
**WO 2020/039804 (27.02.2020 Gazette 2020/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(30) Priority: **22.08.2018 JP 2018155611**

(71) Applicant: **Kyushu University, National University
Corporation
Nishi-ku
Fukuoka-shi
Fukuoka 819-0395 (JP)**

(72) Inventor: **SHIMODA, Mitsuya
Fukuoka-shi, Fukuoka 819-0395 (JP)**

(74) Representative: **EP&C
P.O. Box 3241
2280 GE Rijswijk (NL)**

(54) **DEVICE FOR MANUFACTURING LIQUID PRODUCT AND METHOD FOR MANUFACTURING LIQUID PRODUCT**

(57)    A device for manufacturing a liquid product includes a tubular processor provided in a liquid-tight manner, a liquid delivery pump which is connected to a first end side of the processor and is configured to cause a liquid material to flow into an inside of the processor, and a pressure control mechanism which is connected to a second end side of the processor and is configured to control a pressure of the liquid material flowing inside the processor to 1 MPa or more, in which based on a volume of an internal space communicating from the liquid delivery pump to the pressure control mechanism, operating conditions of the liquid delivery pump are controlled so that a time required from when the liquid material flows into the internal space to when the liquid material is discharged via the pressure control mechanism is 3 seconds or more.

FIG. 1

**Description**

[Technical Field]

The present invention relates to a device for manufacturing a liquid product and a method for manufacturing a liquid product.

Priority is claimed on Japanese Patent Application No. 2018-155611, filed on August 22, 2018, the content of which is incorporated herein by reference.

[Background Art]

In the related art, many liquid food products have been distributed on a daily basis. In the following description, a food product that is a liquid at room temperature and contains water as a medium is referred to as a "liquid product". Each company has considered applying added values in order to differentiate liquid products.

For example, as an added value of a liquid product, improvement of a food texture (mouthfeel) when the liquid product is eaten has been studied. A method of adding an emulsifier, a thickener, or various sugars to a liquid product is known in order to make the mouthfeel of the liquid product more preferred by a consumer. Further, it is known that a liquid product obtained by aging a liquid material for a long period of time is sold.

[Citation List]

[Patent Document]

[Patent Document 1]
Japanese Patent No. 3098639
[Patent Document 2]
Japanese Unexamined Patent Application, First Publication No. 2006-42814

[Summary of Invention]

[Technical Problem]

So far, various methods have been studied in order to improve mouthfeel and increase an added value of a liquid product, but further improvement has been required.

The present invention is made in consideration of such circumstances, and an object thereof is to provide a device for manufacturing a liquid product capable of easily manufacturing a liquid product having improved mouthfeel. Another object of the present invention is to provide a method for manufacturing a liquid product capable of easily improving the mouthfeel of the liquid product.

[Solution to Problem]

In order to solve the above problems, according to an aspect of the present invention, there is provided a device for manufacturing a liquid product, including: a tubular processor provided in a liquid-tight manner; a liquid delivery pump which is connected to a first end side of the processor and is configured to cause a liquid material to flow into an inside of the processor; and a pressure control mechanism which is connected to a second end side of the processor and is configured to control a pressure of the liquid material flowing inside the processor to 1 MPa or more, in which based on a volume of an internal space communicating from the liquid delivery pump to the pressure control mechanism, operating conditions of the liquid delivery pump are controlled so that a time required from when the liquid material flows into the internal space to when the liquid material is discharged via the pressure control mechanism is 3 seconds or more.

In one aspect of the present invention, the device may include a control unit that is configured to control the operating conditions.

In one aspect of the present invention, the liquid delivery pump may not have an accumulator.

In one aspect of the present invention, the pressure control mechanism may be a back pressure valve.

In one aspect of the present invention, the pressure control mechanism may be a homogenizing valve.

In one aspect of the present invention, the device may further include a storage unit that is connected to the liquid delivery pump and is configured to store the liquid material, in which the storage unit may have a temperature adjusting mechanism that is configured to adjust the temperature of the liquid material.

In one aspect of the present invention, the device may further include: a heating mechanism that is provided in a path on an upstream side of the liquid delivery pump with respect to the processor and heats the liquid material; and a cooling mechanism that is provided in a path between the heating mechanism and the liquid delivery pump and cools the heated liquid material.

In one aspect of the present invention, the device may further include a stationary cleaning device that is configured to clean the inside of the processor.

Further, according to another aspect of the present invention, there is provided a method for manufacturing a liquid product using the above-described device for manufacturing a liquid product, including: a step of causing the liquid material to continuously flow into the internal space and continuously discharging the liquid material from the internal space via the pressure control mechanism to obtain the liquid product.

[Advantageous Effects of Invention]

According to the present invention, it is possible to provide a device for manufacturing a liquid product capable of easily manufacturing a liquid product having an improved mouthfeel. Further, it is possible to provide a method for manufacturing a liquid product capable of easily improving the mouthfeel of the liquid product.

[Brief Description of Drawings]

Fig. 1 is an explanatory diagram of a liquid product manufacturing device.
Fig. 2 is an explanatory diagram of a manufacturing device used in Example.
Fig. 3 is a graph illustrating results of Example 6.
Fig. 4 is a graph illustrating the results of Example 6.
Fig. 5 is a graph illustrating results of Example 8.

[Description of embodiments]

Hereinafter, a liquid product manufacturing device and a liquid product manufacturing method according to an embodiment of the present invention will be described. Moreover, in all drawings below, dimensions and ratios of components are appropriately different in order to make the drawings easier to see.

[Liquid Product Manufacturing Device]

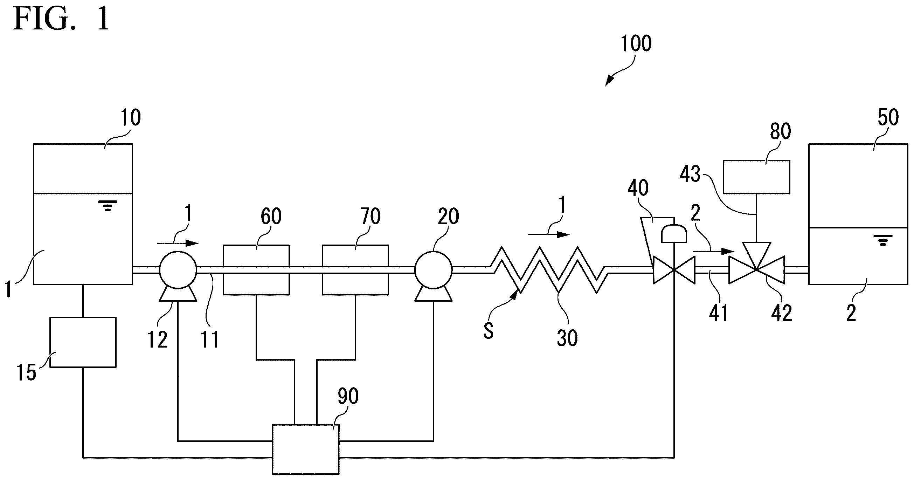

Fig. 1 is a schematic diagram illustrating a liquid product manufacturing device 100 according to the present embodiment.

Here, a "liquid" in the present specification means a state having a certain fluidity at room temperature. In this sense, the "liquid" includes not only a substance in a liquid state but also a substance in the form of a gel or a paste.

Further, in the present specification, a "liquid product" refers to a food product that is "liquid" at room temperature and contains water as a medium.

When the liquid product is a food product, the "liquid product" may include drinks that do not contain alcohol such as water, fruit juice, milk beverages, tea beverages, coffee beverages, sports drinks, or nutritional drinks and drinks that contain alcohol such as white liquor highballs, sake, wine, whiskey, brandy, and shochu.

As illustrated in the drawing, a manufacturing device 100 includes a storage unit 10, a pipe 11, a liquid delivery pump 20, a processor 30, a pressure adjustment valve (pressure control mechanism) 40, a pipe 41, and a product tank 50. Further, the manufacturing device 100 includes a heating unit (heating mechanism) 60, a cooling unit (cooling mechanism) 70, a stationary cleaning device 80, and a control unit 90.

The manufacturing device 100 is used to manufacture a liquid product 2 by subjecting a liquid material 1 which is the above-described object to be processed to hydrostatic pressure processing, and then continuously discharging the liquid material 1 in a pressurized state from the pressure adjustment valve 40.

Hereinafter, they will be described in order.

The storage unit 10 is a tank for storing the liquid material 1 which is a raw material. The storage unit 10 may have a temperature adjusting mechanism 15. The temperature adjusting mechanism 15 adjusts the temperature of the liquid material 1 stored in the storage unit 10 to a desired temperature.

The liquid material 1 is discharged from the storage unit 10 using the liquid delivery pump 12. The liquid material 1 flows to a downstream side through the pipe 11. As the liquid delivery pump 12, a so-called non-volumetric pump can be used.

The liquid material 1 in the pipe 11 is heated and sterilized by the heating unit 60 provided in a path of the pipe 11. As the heating unit 60, a device usually used for heat sterilization of the liquid material 1 in the pipe 11 can be used.

The liquid material 1 heated by the heating unit 60 is cooled by the cooling unit 70 provided on the downstream side. As the cooling unit 70, a device usually used for cooling the liquid material 1 in the pipe 11 can be used.

As each of the heating unit 60 and the cooling unit 70, a plate type heat exchanger or a multi-tube type heat exchanger can be used.

The pipe 11 is connected to the liquid delivery pump 20. The liquid delivery pump 20 feeds the liquid material 1 flowing inside the pipe 11 so that the liquid material 1 flows to an inside of the processor 30 disposed on the downstream side.

As the liquid delivery pump 20, a so-called positive displacement pump can be used. Further, as the liquid delivery pump 20, a pump having a configuration that suppresses pulsation can be used. As the pump having the configuration of suppressing the pulsation, a pump having a configuration of suppressing pulsation without an accumulator, such as a multi-unit reciprocating pump, can be used. By using a pump that does not have an accumulator, it is possible to suppress growth of germs.

The processor 30 is a tubular member provided in a liquid-tight manner. For example, the processor 30 is a member having a columnar internal space.

By disposing a perforated plate on a first end side 30a (inlet side) of the processor 30, it is possible to easily generate a plug flow in the processor 30.

For example, the processor 30 can be used is a form in which the first end side 30a faces downward in the gravity direction, a second end side 30b faces upward in the gravity direction, and the processor 30 extends from the first end side 30a to the second end side 30b.

A liquid delivery pump 20 is connected to the first end side 30a of the processor 30. Moreover, the pressure adjustment valve 40 is connected to the second end side 30b of the processor 30.

The pressure adjustment valve 40 has a function of flowing the liquid material 1 while maintaining an internal pressure of an internal space S communicating with the liquid delivery pump 20, the processor 30, and the pressure adjustment valve 40. In the liquid product manufacturing device 100 of the present embodiment, a set pressure is 1 MPa or more. Further, the set pressure of the pressure adjustment valve 40 can be 12 MPa or less.

As the pressure adjustment valve 40, a device having a generally known configuration can be used.

For example, as the pressure adjustment valve 40, a known back pressure valve can be used. As the back pressure valve, a configuration is known, which includes an inflow path, a discharge path, a recess connecting the inflow path and the discharge path to each other, a valve body (diaphragm) which is provided in the recess and closes a discharge path end, and a pressing member which presses the valve body against the discharge path end. As the pressing member, a configuration having an air cylinder which presses the valve body and an adjusting mechanism which adjusts a pressure of compressed air supplied to the air cylinder is known. Further, the pressing member can adopt a configuration having a spring which presses the valve body and an adjusting bolt which compresses the spring and adjusts a pressure for pressing the valve body.

In the back pressure valve, a high-pressure liquid material 1 flows into the recess through the inflow path. When the pressure of the liquid material 1 exceeds the pressing force (pressure) of the pressing member, the valve body is detached from the discharge path end and the discharge path end is opened. As a result, the high-pressure liquid material 1 is discharged from the internal space S.

Further, as the pressure adjustment valve 40, a homogenizing valve included in a known high-pressure homogenizer can also be used. As a homogenizing valve, a configuration is known, which includes a valve seat having a discharge hole formed therein and a valve body disposed so as to face an outlet of the discharge hole.

In the homogenizing valve, the high-pressure liquid material 1 passes through the discharge hole. The high-pressure liquid material 1 flowing out of the discharge hole suddenly decreases in pressure and rapidly increases in speed, and thus a strong shear stress (shearing stress) is generated in a gap between a valve sheet and the valve body. The liquid material 1 flows to the downstream side while colliding with a valve body disposed so as to face the outlet of the discharge hole.

In the pressure adjustment valve 40, the set pressure can be appropriately adjusted.

When the pressure adjustment valve 40 is a back pressure valve, the set pressure can be appropriately adjusted by adjusting the pressure for pressing the valve body with the pressing member.

When the pressure adjustment valve 40 is the homogenizing valve, the set pressure can be appropriately adjusted by adjusting the diameter of the discharge hole, a gap between the discharge hole and the valve body, or the like.

Accordingly, the high-pressure liquid material 1 adjusted to the set pressure is discharged from the internal space S. The liquid material 1 becomes a liquid product 2 when the liquid material 1 is discharged from the pressure adjustment valve 40.

The pressure adjustment valve 40 can be connected to the processor 30 so as to be located at a highest position (highest position in the gravity direction) in the internal space S. The pressure adjustment valve is connected at the position, and thus when a gas is mixed in the processor 30, the liquid material 1 flowing in the internal space S is unlikely to flow, and a dead space in which the gas is likely to accumulate does not easily occur. Therefore, it becomes easy to discharge the gas in the processor 30.

The pipe 41 is connected to the product tank 50. The product tank 50 stores the liquid product 2.

Further, the pipe 41 includes a three-way valve 42 in the path. The stationary cleaning device 80 is connected to the three-way valve 42 via a pipe 43.

The stationary cleaning device 80 is a device for introducing water, hot water, cleaning liquid, acid, alkaline solution, water vapor, or the like into the internal space at regular intervals or when the liquid material 1 is replaced, and automatically cleaning and sterilizing the internal space without dismantling the processor 30. As the stationary cleaning device 80, a device having a generally known configuration can be appropriately adopted.

The control unit 90 controls the liquid delivery pump 12, the temperature adjusting mechanism 15, the heating unit 60, the cooling unit 70, the liquid delivery pump 20, and the pressure adjustment valve 40. For example, the control unit 90 can control the liquid delivery pump 20 to adjust a time required for the liquid material 1 to flow in the internal space S. Further, the control unit 90 can control the pressure adjustment valve 40 to adjust a pressure of the liquid material 1 flowing in the internal space S. Further, the control unit 90 can control the temperature adjusting mechanism 15, the heating unit 60, and the cooling unit 70 to control the temperature of the liquid material 1 flowing into the internal space S via the liquid delivery pump 20.

A pressure homogenizer for the purpose of preparing an emulsion and the above-mentioned manufacturing device 100 have in common that they have a mechanism for pressurizing and feeding the liquid material 1 and depressurizing the pressurized liquid material 1 at once. However, while an emulsifying action depends only on a processing pressure and a shape of a depressurizing mechanism (homogenizing valve, back pressure valve) in the pressure homogenizer, not only the processing pressure but also a pressure holding time (required time) is an important factor in the manufacturing device 100 of the present application. Therefore, the manufacturing device 100 and the pressure homogenizer are essentially different devices.

[Liquid Product Manufacturing Method]

When the liquid product 2 is manufactured using the manufacturing device 100, for example, the following manufacturing method can be adopted.

First, the liquid material 1 discharged from the storage unit 10 is heated and sterilized by the heating unit 60. The heat sterilization is performed under appropriately set conditions (temperature and heating time) according to a type of the liquid material 1 and a required quality of the liquid product to be manufactured.

Next, the liquid material 1 heated by the heating unit 60 is cooled by the cooling unit 70. As will be described in detail later, continuous pressure processing performed by the processor 30 is affected by a liquid temperature of the liquid material 1. Therefore, the cooling unit 70 cools the liquid material 1 so that the liquid material 1 has a temperature suitable for the continuous pressure processing in the processor 30.

Next, the liquid material 1 is made to flow into the processor 30 using the liquid delivery pump 20. The liquid delivery pump 20 continuously flows the liquid material 1 into the processor 30 even after the processor 30 is filled with the liquid material 1. Accordingly, a pressure (static pressure) of the liquid material 1 in the internal space S increases.

In this case, in the manufacturing device 100 having the pressure adjustment valve 40, the liquid material 1 flowing into the internal space S flows in the internal space S in a state of being pressurized to a set pressure of the pressure adjustment valve 40 in the internal space S. The pressure of the liquid material 1 flowing in the internal space S is 1 MPa or more. Further, the pressure of the liquid material 1 can be 11 MPa or less, and may be 6 MPa or less.

A time required from when the liquid material 1 flows into the internal space S by the liquid delivery pump 20 to when the liquid material 1 is discharged through the pressure adjustment valve 40 is determined based on a volume of the internal space S and operating conditions of the liquid delivery pump 20. The required time can be 3 seconds or more. Further, the required time can be 60 seconds or less.

Next, when the pressure of the liquid material 1 in the internal space S reaches the set pressure of the pressure adjustment valve 40, the liquid material 1 in the internal space S passes through a gap of a flow path in the pressure adjustment valve 40 and is discharged to a downstream side of the pressure adjustment valve 40. After that, by maintaining the pressure of the liquid material 1 in the internal space S at the set pressure of the pressure adjustment valve 40, the liquid material 1 in the internal space S is continuously discharged to the downstream side of the pressure adjustment valve 40.

The pressure (static pressure) of the liquid material 1 sharply decreases from the set pressure of the pressure adjustment valve 40 to the pressure of the liquid material 1 in the pipe 41. When the pressure decreases sharply, a strong shear stress is generated in the liquid material 1.

The inventor believes that physical properties of the liquid material 1 are affected by the fact that the liquid material 1 is pressurized for a certain period of time and the shear stress generated in a process of depressurizing the liquid material 1 from a pressurized state.

It is considered that a strong shear stress is generated in the liquid material 1 passing through the pressure adjustment valve 40 because the liquid material 1 passes through a narrow gap at a high speed. In addition, it is considered that a shock wave accompanied by cavitation is generated in the liquid material 1 after passing through the pressure adjustment valve 40 due to sudden expansion of the flow path or the collision of the liquid material 1 with an inner wall of the pipe and or the valve body.

As illustrated in Examples described later, in the present invention, when the pressure holding time is constant, mouthfeel of the liquid material 1 is improved as the processing pressure increases, and when the processing pressure at which a processing effect is maximized is exceeded, the effect of improving the mouthfeel of the liquid material 1 decreases.

Also, as the processing pressure increases, the required time decreases, and thus the mouthfeel is improved.

That is, it can be seen that the effect of the present invention is exhibited by an appropriate combination of the magnitude of the pressure applied to the liquid material 1 and the pressure holding time, and a rapid depressurization operation.

The liquid material 1 is pressurized in the internal space S for a predetermined time and then receives a shear stress in the pressure adjustment valve 40, and thus becomes the liquid product 2. As will be described in detail later, the obtained liquid product 2 has a good mouthfeel.

Water is a hydrogen-bonded network-like liquid (with densely formed hydrogen-bonded networks). Regarding the above results, the inventor considered that a hydrogen bond network state of water was changed by the liquid product manufacturing method of the present invention. It is considered that this change in the hydrogen bond network affected the "mouthfeel" in sensory evaluation.

Regarding the effect of the present invention as described above, the inventor considered that the hydrogen bond network is changed with a passage of time by holding the liquid material 1 under pressure, and then the liquid material 1 held under pressure is rapidly depressurized, the hydrogen bond network is irreversibly changed by the generated shear stress, and the liquid product 2 having improved mouthfeel is obtained.

As described above, in the manufacturing device 100 of the present embodiment, the liquid material 1 is kept in a state of being pressurized to 1 MPa or more for 3 seconds or more, and then the liquid material 1 continuously passes through the pressure adjustment valve 40 with a pressure change that the pressure of the liquid material 1 decreases sharply when the liquid material 1 passes through the pressure adjustment valve 40. Therefore, in the manufacturing device 100, the liquid product 2 can be continuously manufactured, and high production efficiency can be realized.

According to the concept of the related art, the mouthfeel of the liquid material 1 is improved by adding additives such as emulsifiers and thickeners and aging for a long time to obtain a liquid product. However, when the mouthfeel of a liquid product is improved by adding an additive, the additive may affect a taste of the liquid product. Further, when the mouthfeel of the liquid product is improved by aging for a long time, the production efficiency is lowered because the manufacturing of the liquid product requires a long time.

Meanwhile, in the present invention, the mouthfeel of the liquid product can be improved without adding an additive and in a short time as compared with the aging.

Therefore, according to the liquid product manufacturing device having the above configuration, it is possible to easily manufacture a liquid product having an improved mouthfeel.

Further, according to the liquid product manufacturing method having the above-mentioned configuration, the mouthfeel of the liquid product can be easily improved.

Moreover, in the liquid product manufacturing device 100 of the present embodiment, the pressure adjustment valve 40 is used, but instead of the pressure adjustment valve 40, a pressure control mechanism may be configured in which an opening diameter of the second end side 30b of the processor 30 is narrowed to adjust the pressure of the liquid material 1. In that case, a space that communicates from the liquid delivery pump 20 to a portion where the opening diameter is narrowed at the second end side 30b corresponds to the internal space S.

In this case, the pressure of the liquid material 1 in the internal space S can be controlled by controlling the opening diameter (orifice diameter) of the second end side 30b and a liquid feeding rate of the liquid delivery pump 20.

Further, in the liquid product manufacturing device 100 of the present embodiment, the liquid delivery pump 20 to the pressure adjustment valve 40 form one closed space and function as the processor 30, but the present invention is not limited to this. For example, a second pressure control mechanism having the same configuration as the pressure adjustment valve 40 is further provided in the flow path from the liquid delivery pump 20 to the pressure adjustment valve 40, and the space from the liquid delivery pump 20 to the pressure adjustment valve 40 (first pressure control mechanism) may be divided into two spaces.

In this case, for example, the set pressure in the second pressure control mechanism and the set pressure in the pressure adjustment valve 40 can be made different. For example, a set pressure (primary pressure) in the second pressure control mechanism can be set to 10 MPa to 100 MPa, and a set pressure (secondary pressure) in the pressure adjustment valve 40 can be set to 1 MPa to 12 MPa.

In this case, the space communicating from the second pressure control mechanism to the pressure adjustment valve 40 corresponds to the internal space S. When the liquid product manufacturing device has the second pressure control mechanism, the operating conditions can be controlled so that the time required for the liquid material 1 to flow into the space from the second pressure control mechanism to the pressure adjustment valve 40 and to be discharged through the pressure adjustment valve 40 is 3 seconds or more.

Further, in the liquid product manufacturing device 100 of the present embodiment, the liquid material 1 is sterilized by heating on the upstream side of the processor 30, but the present invention is not limited to this, and heat sterilization can be performed after the continuous pressure processing in the processor 30. By performing the heat sterilization after the continuous pressure processing, it is possible to realize a manufacturing step in which a liquid mixture is prepared using water that has been continuously pressure processed in advance and then heat sterilized, which is preferable because it is easy to introduce into an existing manufacturing step.

Although preferred embodiments of the present invention have been described above with reference to the accompanying drawings, it goes without saying that the present invention is not limited to the examples. The various shapes and combinations of constituent members illustrated in the above-mentioned examples are examples, and can be variously changed based on design requirements or the like without departing from the gist of the present invention.

[Examples]

The present invention will be described below with reference to Examples, but the present invention is not limited to the Examples.

(Processing Device)

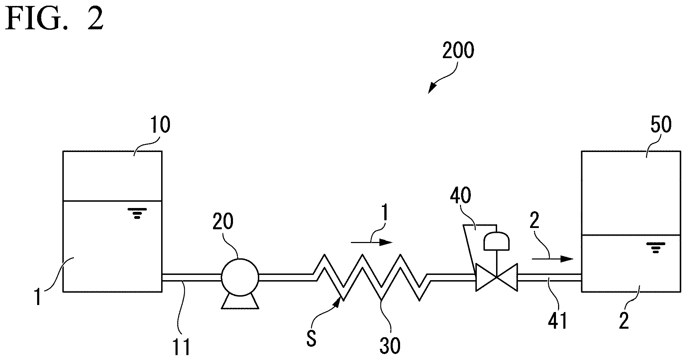

In the present Example, pressure processing of each sample was performed using the manufacturing device 200 illustrated in Fig. 2. The reference numerals illustrated in Fig. 2 are common to those in Fig. 1.

As the liquid delivery pump 20, an NP-KX-500 (J) type non-pulsating flow pump manufactured by Nihon Seimitsu Kagaku Co., Ltd. was used.

A stainless steel tube was used as the processor 30.

As the pressure adjustment valve 40, a piston sensor type valve of the 26-1700 series manufactured by Techmation Co., Ltd. was used.

[Example 1]

A volume of the stainless steel tube used as the processor 30 was 15 ml when it was assumed that both ends were closed. The following study was conducted assuming that a volume of the internal space S communicating from the liquid delivery pump 20 to the pressure adjustment valve 40 was 15 mL, which was the same as the volume of the stainless steel tube.

A commercially available PET bottled mineral water was used as the liquid material 1, and fed at a liquid feeding rate of 60 mL/min using the liquid delivery pump 20. The time required from when the liquid material 1 flows into the internal space S by the liquid delivery pump 20 to when the liquid material is discharged through the pressure adjustment valve 40 was 15 seconds. The liquid material 1 was discharged under the atmospheric pressure via the pressure adjustment valve 40.

(Examples 1-1-1 to 1-1-9)

The set pressure of the pressure adjustment valve 40 was set as illustrated in Table 1 for processing, and each sample of Examples 1-1-1 to 1-1-9 was prepared. The processing was carried out in the constant temperature room, and the temperature of the liquid material 1 was adjusted to 10°C by controlling the temperature of the constant temperature room.

(Examples 1-2-1 to 1-2-9)

The set pressure of the pressure adjustment valve 40 was set as illustrated in Table 2 for processing, and each sample of Examples 1-2-1 to 1-2-9 was prepared. The processing was carried out in the constant temperature room, and the temperature of the liquid material 1 was adjusted to 20°C by controlling the temperature of the constant temperature room.

(Examples 1-3-1 to 1-3-9)

The set pressure of the pressure adjustment valve 40 was set as illustrated in Table 3 for processing, and each sample of Examples 1-3-1 to 1-3-9 was prepared. The processing was carried out in the constant temperature room, and the temperature of the liquid material 1 was adjusted to 30°C by controlling the temperature of the constant temperature room.

(Examples 1-4-1 to 1-4-9)

The set pressure of the pressure adjustment valve 40 was set as illustrated in Table 4 for processing, and each sample of Examples 1-4-1 to 1-4-9 was prepared. The processing was carried out in the constant temperature room, and the temperature of the liquid material 1 was adjusted to 40°C by controlling the temperature of the constant temperature room.

(Examples 1-5-1 to 1-5-9)

The set pressure of the pressure adjustment valve 40 was set as illustrated in Table 5 for processing, and each sample of Examples 1-5-1 to 1-5-9 was prepared. The processing was carried out in the constant temperature room, and the temperature of the liquid material 1 was adjusted to 50°C by controlling the temperature of the constant temperature room.

(Comparative Examples 1-1 to 1-5)

The commercially available PET bottled mineral water itself was used as a sample of Comparative Examples 1-1 to 1-5.

(Evaluation)

Evaluation was performed by a sensory evaluation of 3 persons on a day after the processing. The evaluation was performed on "smoothness of mouthfeel" when an evaluator put the sample in the mouth, that is, physical sensation in an oral cavity.
In the sensory evaluation, the samples of Comparative Examples 1-1 to 1-5, which were the commercially available PET bottled mineral water, were evaluated as "0", and a virtual sample that each evaluator assumed to have the smoothest mouthfeel was "10", it was evaluated on an 11-point scale from 0 to 10.
The results were calculated as an arithmetic mean value of the evaluation results of the three persons.
The evaluation results are illustrated in Tables 1 to 5 below.

[Table 1]

| | Comparative Example 1-1 | Example 1-1-1 | Example 1-1-2 | Example 1-1-3 | Example 1-1-4 | Example 1-1-5 | Example 1-1-6 | Example 1-1-7 | Example 1-1-8 | Example 1-1-9 |
|---|---|---|---|---|---|---|---|---|---|---|
| Proce ssing pressure (MPa) | 0.0 | 1.0 | 2.0 | 3.0 | 4.0 | 5.0 | 6.0 | 7.0 | 9.0 | 11.0 |
| Smoothness of mouthfeel | 0.0 | 1.3 | 1.3 | 2.7 | 4.3 | 7.3 | 5.3 | 1.7 | 1.7 | 1.7 |

[Table 2]

| | Comparative Example 1-2 | Example 1-2-1 | Example 1-2-2 | Example 1-2-3 | Example 1-2-4 | Example 1-2-5 | Example 1-2-6 | Example 1-2-7 | Example 1-2-8 | Example 1-2-9 |
|---|---|---|---|---|---|---|---|---|---|---|
| Processing pressure (MPa) | 0.0 | 1.0 | 2.0 | 3.0 | 4.0 | 5.0 | 6.0 | 7.0 | 9.0 | 11.0 |
| Smoothne ss of mouthfeel | 0.0 | 1.3 | 1.7 | 5.3 | 8.7 | 4.3 | 2.3 | 1.7 | 1.7 | 1.3 |

[Table 3]

| | Comparative Example 1-3 | Example 1-3-1 | Example 1-3-2 | Example 1-3-3 | Example 1-3-4 | Example 1-3-5 | Example 1-3-6 | Example 1-3-7 | Example 1-3-8 | Example 1-3-9 |
|---|---|---|---|---|---|---|---|---|---|---|
| Processing pressure (MPa) | 0.0 | 1.0 | 2.0 | 3.0 | 4.0 | 5.0 | 6.0 | 7.0 | 9.0 | 11.0 |
| Smoothness of mouthfeel | 0.0 | 2.3 | 2.7 | 8.7 | 8.3 | 2.3 | 1.7 | 1.7 | 1.7 | 1.3 |

[Table 4]

| | Comparative Example 1-4 | Example 1-4-1 | Example 1-4-2 | Example 1-4-3 | Example 1-4-4 | Example 1-4-5 | Example 1-4-6 | Example 1-4-7 | Example 1-4-8 | Example 1-4-9 |
|---|---|---|---|---|---|---|---|---|---|---|
| Processin g pressure (MPa) | 0.0 | 1.0 | 2.0 | 3.0 | 4.0 | 5.0 | 6.0 | 7.0 | 9.0 | 11.0 |
| Smoothne ss of mouthfeel | 0.0 | 3.3 | 5.3 | 8.7 | 4.7 | 1.7 | 1.3 | 1.3 | 1.3 | 1.3 |

[Table 5]

| | Comparative Example 1-5 | Example 1-5-1 | Example 1-5-2 | Example 1-5-3 | Example 1-5-4 | Example 1-5-5 | Example 1-5-6 | Example 1-5-7 | Example 1-5-8 | Example 1-5-9 |
|---|---|---|---|---|---|---|---|---|---|---|
| Processing pressure (MPa) | 0.0 | 1.0 | 2.0 | 3.0 | 4.0 | 5.0 | 6.0 | 7.0 | 9.0 | 11.0 |
| Smoothness of mouthfeel | 0.0 | 4.7 | 8.3 | 2.7 | 1.7 | 1.7 | 1.7 | 1.3 | 1.3 | 1.0 |

As a result of the evaluation, all samples subjected to the continuous pressure processing had a better mouthfeel than unprocessed samples. Moreover, it was also found that the most suitable processing pressure differs depending on each processing temperature. As the processing temperature increases, the most suitable processing pressure tends to decrease.

Moreover, effects of a processing type of the continuous pressure processing adopted in the present invention were confirmed by comparing the processing type of the continuous pressure processing with separate batch type hydrostatic pressure processing.

(Confirmation Experiment)

The hydrostatic pressure processing was performed by the following method at the same temperature, pressure, and pressurization holding time (20°C, 4.0 MPa, 15 seconds) as in Example 1-2-4 in which excellent effects were observed in the above Examples.

(Method)

A 100 mL volume polyethylene terephthalate bottle was filled with the same commercially available PET bottled mineral water as that used in Example 1.

In this case, the bottle was filled with mineral water, being careful not to create a space (headspace) at an upper portion of the bottle.

The bottle filled with mineral water in this way was hydrostatically pressure-processed using a desktop CIP device (manufactured by NPa SYSTEM CO., LTD.). The conditions for the hydrostatic pressure processing were a pressure of 4.0 MPa, a processing temperature of 20°C., and a pressure holding time (required time) of 15 seconds, and the time required for each of pressurization and depressurization was within 5 seconds. By deforming the bottle, the mineral water in the bottle was pressurized, and a hydrostatically pressure-processed sample was obtained.

When evaluated by the above-mentioned method, the sample processed under hydrostatic pressure under the above-mentioned conditions was not different from the commercially available PET bottled mineral water itself, and no improvement in mouthfeel was observed.

In addition, the smoothness of the mouthfeel of the sample was maintained at room temperature for 1 month or longer and even after heating at 100°C for 30 minutes. Further confirmation revealed that the smoothness of the mouthfeel of the sample lasted for 3 months or more at the room temperature.

[Example 2]

[Example 2-1]

The volume of the stainless steel tube used as the processor 30 was 3 ml when it was assumed that both ends were closed. The following study was conducted assuming that the volume of the internal space S communicating from the liquid delivery pump 20 to the pressure adjustment valve 40 was 3 mL, which was the same as the volume of the stainless steel tube.

The commercially available PET bottled mineral water was used as the liquid material 1, and fed at a liquid feeding rate of 12 mL/min using the liquid delivery pump 20 illustrated in Fig. 2. The time required from when the liquid material 1 flows into the internal space S by the liquid delivery pump 20 to when the liquid material is discharged through the pressure adjustment valve 40 was 15 seconds. The liquid material 1 after the pressure processing was discharged under the atmospheric pressure through the pressure adjustment valve 40 to obtain a sample of Example 2-1. The processing was carried out in a constant temperature bath, the temperature of the liquid material 1 was adjusted to 20°C by controlling the temperature of the constant temperature room, and the processing pressure was 4 MPa.

[Example 2-2]

A sample of Example 2-2 was obtained in the same manner as in Example 2-1 except that the liquid feeding rate by the liquid delivery pump 20 was set to 30 mL/min (required time: 6.0 seconds).

[Example 2-3]

A sample of Example 2-3 was obtained in the same manner as in Example 2-1 except that the liquid feeding rate by the liquid delivery pump 20 was set to 60 mL/min (required time: 3.0 seconds).

(Comparative Example 2-1)

The commercially available PET bottled mineral water itself was used as a sample of Comparative Example 2-1.

(Evaluation)

Evaluation was performed in the same manner as in Example 1. The evaluation results are illustrated in Table 6 below.

[Table 6]

|  | Compara tive Example 2-1 | Example 2-1 | Example 2-2 | Example 2-3 |
|---|---|---|---|---|
| Required time (seconds) | 0.0 | 15.0 | 6.0 | 3.0 |
| Smoothness of mouthfeel | 0.0 | 8.7 | 7.3 | 3.3 |

As a result of the evaluation, all samples subjected to the continuous pressure processing had a better mouthfeel than the unprocessed samples. In addition, within the evaluated range, as the time required for the pressure processing increased, the smoothness increased.

[Example 3]

(Examples 3-1 to 3-6)

The volume of the stainless steel tube used as the processor 30 was 15 ml when it was assumed that both ends were closed. The following study was conducted assuming that the volume of the internal space S communicating from the liquid delivery pump 20 to the pressure adjustment valve 40 was 15 mL, which was the same as the volume of the stainless steel tube.

A commercially available milk was used as the liquid material 1, and fed at a liquid feeding rate of 60 mL/min using the liquid delivery pump 20 illustrated in Fig. 2. The time required from when the liquid material 1 flows into the internal space S by the liquid delivery pump 20 to when the liquid material is discharged through the pressure adjustment valve 40 was 15 seconds. The liquid material 1 after the pressure processing was discharged under atmospheric pressure via the pressure adjustment valve 40 to obtain a sample.

The set pressure of the pressure adjustment valve 40 was set as illustrated in Table 7 for processing, and each sample of Examples 3-1 to 3-6 was prepared. The processing was carried out in a constant temperature room, and the temperature of the liquid material 1 was adjusted to 40°C by controlling the temperature of the constant temperature room.

(Comparative Example 3-1)

The commercially available milk itself was used as a sample of Comparative Example 3-1.

(Evaluation)

Evaluation was performed in the same manner as in Example 1. The evaluation results are illustrated in Table 7 below.

[Table 7]

|  | Comparative Example 3-1 | Example 3-1 | Example 3-2 | Example 3-3 | Example 3-4 | Example 3-5 | Example 3-6 |
|---|---|---|---|---|---|---|---|
| Proce ssing pressure (MPa) | 0.0 | 1.0 | 2.0 | 2.5 | 3.0 | 4.0 | 5.0 |
| Smoothness of mouthfeel | 0.0 | 4.3 | 7.3 | 9.0 | 8.3 | 3.3 | 3.3 |

As a result of the evaluation, all the samples subjected to the continuous pressure processing had a better mouthfeel than the unprocessed samples.

[Example 4]

(Examples 4-1 to 4-5)

A sample was obtained in the same manner as in Example 3 except that a commercially available PET bottled green tea beverage was used as the liquid material 1 and the temperature of the constant temperature room was controlled to 30°C. In this case, the set pressure of the pressure adjustment valve 40 was set as illustrated in Table 8 for processing, and each sample of Examples 4-1 to 4-5 was prepared.

(Comparative Example 4-1)

The commercially available PET bottled green tea beverage itself was used as a sample of Comparative Example 4-1.

(Evaluation)

The mouthfeel of the sample was evaluated in the same manner as in Example 1.
Moreover, a sensory evaluation was also performed on changes in astringency.
Evaluation was performed by a sensory evaluation of 3 persons on a day after the processing. The evaluation was performed on "astringency" that the evaluator felt when the sample was put in the mouth.
In the sensory evaluation, the sample of Comparative Example 4-1 which was the commercially available PET bottled green tea beverage itself was evaluated as "0", and a virtual sample that each evaluator assumed to have the most reduced astringency was "-10", it was evaluated on an 11-point scale from 0 to -10.
The results were calculated as an arithmetic mean value of the evaluation results of the three persons.
The evaluation results are illustrated in Table 8 below.

[Table 8]

|  | Comparative Example 4-1 | Example 4-1 | Example 4-2 | Example 4-3 | Example 4-4 | Example 4-5 |
|---|---|---|---|---|---|---|
| Processing pressure (MPa) | 0.0 | 1.0 | 2.0 | 2.5 | 3.0 | 4.0 |
| Smoothness of mouthfeel | 0.0 | 3.7 | 7.0 | 8.7 | 8.3 | 6.3 |
| astringency | 0.0 | -4.3 | -7.0 | -8.7 | -8.3 | -7.3 |

As a result of the evaluation, all the samples subjected to the continuous pressure processing had a better mouthfeel than the unprocessed samples. In addition, the astringency of all samples subjected to the continuous pressure processing was reduced as compared with the unprocessed samples.

[Example 5]

[Example 5-1]

The volume of the stainless steel tube used as the processor 30 was 15 ml when it was assumed that both ends were closed. The following study was conducted assuming that the volume of the internal space S communicating from the liquid delivery pump 20 to the pressure adjustment valve 40 was 15 mL, which was the same as the volume of the stainless steel tube.
Ethyl alcohol (hereinafter referred to as ethanol) was diluted with purified water to prepare a 2% by volume ethanol aqueous solution. The ethanol aqueous solution was used as the liquid material 1, and fed at a liquid feeding rate of 60 mL/min using a liquid delivery pump 20.
The liquid material 1 was continuously processed at the set pressure (processing pressure) of the pressure adjustment valve 40 of 4 MPa, the temperature of the constant temperature room (processing temperature of the liquid material 1) of 20°C, and the required time of 15 seconds, the liquid material 1 after the pressure processing was discharged through the pressure adjustment valve 40 to atmospheric pressure to obtain a sample of Example 5-1.

16

[Example 5-2]

A sample of Example 5-2 was obtained in the same manner as in Example 5-1 except that a 4% by volume ethanol aqueous solution was used as the liquid material 1.

[Example 5-3]

A sample of Example 5-3 was obtained in the same manner as in Example 5-1 except that a 6% by volume ethanol aqueous solution was used as the liquid material 1.

(Comparative Example 5-1)

A sample obtained without performing the continuous pressure processing on a 2% by volume ethanol aqueous solution was a sample of Comparative Example 5-1.

(Comparative Example 5-2)

A sample obtained without performing the continuous pressure processing on a 4% by volume ethanol aqueous solution was a sample of Comparative Example 5-2.

(Comparative Example 5-3)

A sample obtained without performing the continuous pressure processing on a 6% by volume ethanol aqueous solution was a sample of Comparative Example 5-3.

<Evaluation by Headspace Method>

4 ml of the sample was put into a headspace analysis container (14 mm in inner diameter and 80 mm in depth) having a volume of 12 ml, and sealed with a screw cap with a Teflon (registered trademark) septum. The sealed container was held in a constant temperature bath at 30°C for 10 minutes to achieve vapor-liquid equilibrium.
Ethanol volatilized in the headspace in the container was sampled for 10 minutes using SPME fiber, and quantified using a gas chromatograph mass spectrometer (GCMS-2010Plus, manufactured by Shimadzu Corporation). The measurement was repeated 4 times, and arithmetic mean and standard deviation of respective measurement results were obtained.
The arithmetic mean and standard deviation of the measurement results are illustrated in Tables 9 to 11 below as "(arithmetic mean) $\pm$ (standard deviation)".

[Table 9]

|  | Example 5-1 | Comparative Example 5-1 |
|---|---|---|
| Peak area | 8. 6 $\pm$ 0. 33 | 5. 6 $\pm$ 0. 44 |

[Table 10]

|  | Example 5-2 | Comparative Example 5-2 |
|---|---|---|
| Peak area | 14. 3 $\pm$ 0. 38 | 8. 9 $\pm$ 0. 27 |

[Table 11]

|  | Example 5-3 | Comparative Example 5-3 |
|---|---|---|
| Peak area | 16. 2 $\pm$ 0. 57 | 12. 2 $\pm$ 0. 17 |

As a result of the measurement, it was confirmed that each sample of Examples 5-1 to 5-3 obtained by performing the continuous pressure processing on the ethanol aqueous solution had an amount of ethanol volatilized into the headspace larger than those of the unprocessed samples of Comparative Examples 5-1 to 5-3 at any ethanol concentration.

The inventor considers this result to be a phenomenon caused by a change in the association state of ethanol molecules in the aqueous solution due to continuous pressure processing. It can be considered that the continuous pressure processing reduced the number of ethanol molecules in the aqueous solution in the association state and increased the number of monodisperse ethanol molecules, and thus ethanol was easily volatilized in the headspace.

Moreover, when the sample of Example 5-2 and the sample of Comparative Example 5-2 were contained in a mouth and oral irritation was evaluated, it was confirmed that the sample of Example 5-2 had a significantly lower oral irritation than the sample of Comparative Example 5-2. The inventor believes that the oral irritation with ethanol is caused by an aggregate of ethanol. In the sample of Example 5-2, it is considered that the oral irritation was reduced because the ethanol molecules in the aqueous solution in the association state were reduced by the continuous pressure processing.

[Example 6]

[Example 6-1]

The volume of the stainless steel tube used as the processor 30 was 15 ml when it was assumed that both ends were closed. The following study was conducted assuming that the volume of the internal space S communicating from the liquid delivery pump 20 to the pressure adjustment valve 40 was 15 mL, which was the same as the volume of the stainless steel tube.

Using purified water as the liquid material 1, the purified water are continuously processed at the set pressure (processing pressure) of the pressure adjustment valve 40 of 3 MPa, the temperature of the constant temperature room (processing temperature of the liquid material 1) of 30°C, and the required time of 15 seconds, and a sample of Example 6-1 was obtained.

(Comparative Example 6-1)

The purified water itself before the continuous pressure processing was used as the sample of Comparative Example 6-1.

<Measurement of Surface Tension>

In the present Example, a surface tension of each sample was precisely measured by the Wilhelmy method (plate method). For the sample of Example 6-1, the surface tension was measured immediately after the sample was prepared.

(Measurement Condition)

Platinum plate: manufactured by Kyowa Interface Science Co., Ltd., and 24 mm x 10 mm x thickness 0.1 mm
Electronic balance: PA114JP model manufactured by OHAUS Co., Ltd.
Constant temperature plate: COOL PLATE manufactured by AS ONE Corporation.
Sample temperature: $25 \pm 0.2$°C

Samples were taken in an alumite petri dish with a diameter of 60 mm. The amount of the sample was set until a liquid level of the sample was at a height of about 3 mm from a bottom surface of the petri dish.

The petri dish containing the sample was placed on a constant temperature plate, and the temperature was controlled. The surface tension was measured immediately after the temperature of the sample reached the set temperature.

Then, the surface tension was measured 0.5, 1.0, 2.0, and 3.0 hours after the first surface tension measurement, respectively. The surface tension was measured 5 times each, and an arithmetic mean value of respective measured values was adopted as a desired surface tension.

According to the present measurement method, the surface tension could be measured with an accuracy of 0.1 mN/m or less as a standard deviation.

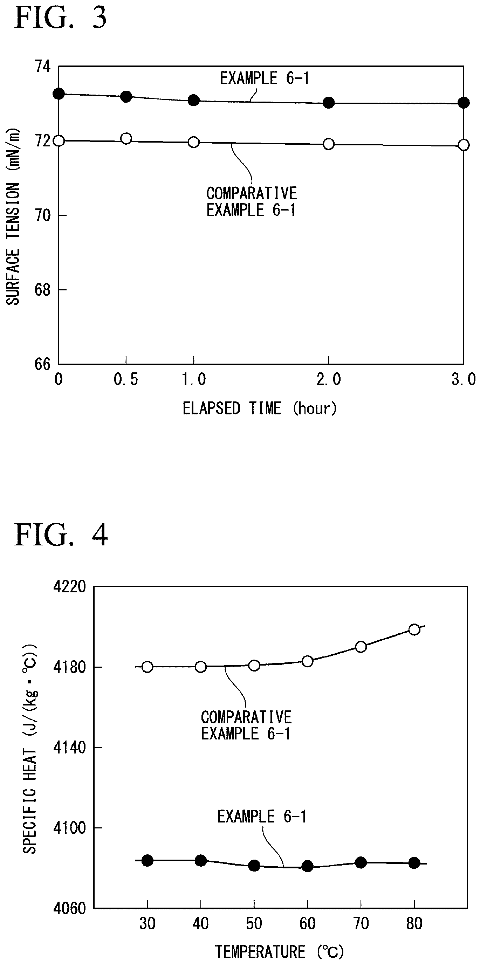

The measurement results are illustrated in Fig. 3. Fig. 3 is a graph illustrating the measurement results of the surface tension of each sample. In the graph illustrated in the drawing, a horizontal axis indicates an elapsed time (leaving time) (unit: time), and a vertical axis indicates the surface tension (unit: mN/m).

When the surface tension of the sample of Comparative Example 6-1 was measured by the above method, the measured value of the surface tension when left for 0 hours was 72.0 mN/m.

When the surface tension of the sample of Example 6-1 was measured, the measured value of the surface tension when left for 0 hours was 73.2 mN/m. The surface tension of the sample of Example 6-1 was clearly higher than that of the sample of Comparative Example 6-1.

Further, as illustrated in the drawing, the surface tension of the sample of Example 6-1 was clearly higher than the surface tension of the sample of Comparative Example 6-1 even after 0.5, 1.0, 2.0, and 3.0 hours had passed.

From the above results, it was found that physical properties of a liquid surface of the sample obtained by subjecting the purified water to the pressure processing of the present invention were different from those of the purified water not subjected to the pressure processing of the present invention.

<Measurement of Specific Heat>

In addition, specific heat of each sample was measured using a differential scanning calorimeter (X-DSC7000, manufactured by Hitachi High-Tech Science Corporation). The specific heat of the sample of Example 6-1 was measured using a silver cell with the sample of Comparative Example 6-1 whose specific heat was measured in advance as a reference substance. The rate of temperature rise at the time of measurement was 2°C/min.

The specific heat was calculated by the following Expression (1).

[Expression 1]

$$\text{Specific heat (J/(kg·°C))} = \frac{\text{Endothermic amount of pressure-processed water}}{\text{Endothermic amount of unprocessed water}} \times \frac{\text{Mass of unprocessed water}}{\text{Mass of pressure-processed water}} \times \text{Specific heat of unprocessed water}$$

$$\cdots (1)$$

Fig. 4 is a graph illustrating the measurement results of the specific heat. A horizontal axis of the graph illustrated in Fig. 4 indicates a measurement temperature (unit: °C), and a vertical axis indicates the specific heat (unit: J/(kg·°C)) at the measurement temperature.

The specific heat of the sample (unprocessed purified water) of Comparative Example 6-1 increased from 4178 J/kg·°C at 30°C to 4196 J/kg·°C at 80°C.

Meanwhile, almost no influence of temperature was observed from 4086 J/kg·°C at 30°C to 4083 J/kg·°C at 80°C in the specific heat of the sample (pressure-processed water) of Example 6-1.

In addition, the specific heat of the sample of Example 6-1 was 2.2 to 2.7% smaller than that of the sample of Comparative Example 6-1.

From the above results, it was clarified that physical properties of the sample of Example 6-1 were different from those of the sample of Comparative Example 6-1.

Water is a hydrogen-bonded network-like liquid (with densely formed hydrogen-bonded networks). The inventor considered that the result illustrated in Example 6 was due to the change in the hydrogen bond network state of water by the liquid product manufacturing method of the present invention. It is considered that this change in the hydrogen bond network affected the "mouthfeel" in the sensory evaluation.

[Example 7]

(Examples 7-1 to 7-3)

Using the commercially available PET bottled mineral water as the liquid material 1, the processing was performed by changing the processing pressure and the time required from when the liquid material 1 flows into the internal space S by the liquid delivery pump 20 to when the liquid material is discharged through the pressure adjustment valve 40.

Three types of stainless steel tubes used as the processor 30 having different volumes when both ends are assumed to be closed were prepared. The volumes of the stainless steel tubes were 3 ml, 6 ml, and 15 ml, respectively.

The liquid was fed at a liquid feeding rate of 60 mL/min using the liquid delivery pump 20. The processing pressures were 4.0 MPa, 7.0 MPa, and 10.0 MPa.

Under the above conditions, after the liquid material 1 flowed into the internal space S by the liquid delivery pump 20, the liquid material 1 subjected to the pressure processing was discharged to the atmospheric pressure through the pressure adjustment valve 40, and the sample of Example 7 was obtained.

The processing was carried out in a constant temperature bath. The temperature of the liquid material 1 was adjusted to 20°C by controlling the temperature of the constant temperature bath.

(Comparative Example 7)

The commercially available PET bottled mineral water itself was used as a sample of Comparative Example 7.

(Evaluation)

Evaluation was performed in the same manner as in Example 1. Table 12 below illustrates processing conditions that give the smoothest mouthfeel for each processing pressure.

[Table 12]

|  | Comparative Example 7 | Example 7-1 | Example 7-2 | Example 7-3 |
|---|---|---|---|---|
| Volume of stainless steel tube (mL) | - | 15 | 6 | 3 |
| Liquid feeding rate (mL/min) | - | 60 | 60 | 60 |
| Processing pressure (MPa) | 0.0 | 4.0 | 7.0 | 10.0 |
| Required time (seconds) | 0.0 | 15 | 6.0 | 3.0 |
| Smoothness of mouthfeel | 0.0 | 8. 7 | 9.0 | 7.7 |

As a result of the evaluation, it was found that, within the range of the conditions of Example 7, the processing pressure increased, the time required to obtain the same result (smoothness of mouthfeel) was shortened.

[Example 8]

(Examples 8-1 to 8-3)

The samples obtained in the processing of Examples 7-1 to 7-3 and the sample of Comparative Example 7 were stored at 25°C for 4 days or more in a state opened to the atmosphere, air was saturated and dissolved in the samples, and thus samples of Examples 8-1 to 8-3 and Comparative Example 8 were obtained, respectively.
For each of the obtained samples, differences in properties at an interface with a hydrophobic solid surface were confirmed. Recent studies suggest that at the interface between the hydrophobic solid surface and water, water molecules have an ordered structure that is closer to ice than water inside a normal liquid. If the continuous pressure processing in the present invention affects the structure-related properties of water such as the hydrogen bond network of water, the inventor wondered if there would be a difference between the unprocessed water and the processed water even at the interface with the hydrophobic solid surface.
In Example 8, polyethylene was used as the hydrophobic solid, and the effect of the continuous pressure processing of the present invention was confirmed from the difference in the behavior of water in contact with the polyethylene wall.

<Generation of Supersaturated Dissolved Air Bubbles on Polyethylene wall>

Using a 10 mL polyethylene syringe, 10 mL of each sample was sucked up, being careful not to let bubbles enter the syringe. After completely wiping off water droplets around the syringe, a mass of the syringe containing the sample was precisely weighed. Let the weighed mass be W1.
Next, the syringe containing the sample was held in a constant temperature water bath at 35°C for 3 hours with an opening at a tip downward in the gravity direction. By this holding, a portion of the dissolved air of the sample in the syringe becomes bubbles on the inner surface of the syringe, and the generated bubbles discharge the sample to the outside of the syringe through the opening of the syringe.
After the above holding, the syringe was taken out from the constant temperature water bath, the water droplets around the syringe were completely wiped off, and then the mass of the syringe containing the sample was precisely weighed. Let the weighed mass be W2.
Considering that a difference between the obtained W1 and W2 corresponds to an amount of bubbles generated inside the syringe in the syringe held in the constant temperature water bath, the amount of bubbles generated Q per 1000 mL of the sample was calculated from the following Expression (2).

$$Q = (W1 - W2) \times 1000/10 \dots (2)$$

Further, since the bubbles generated in the syringe contain water vapor corresponding to a saturated water vapor pressure at 35°C, a net amount of generated air was determined from a partial pressure.

# EP 3 841 888 A1

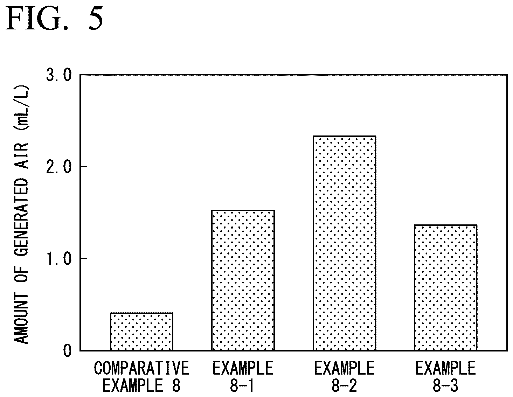

The amount of generated air was determined for each sample. The measurement results are illustrated in Fig. 5.

Moreover, saturated solubility (volume basis) of air with respect to water at 25°C is 0.0165, and saturated solubility of air with respect to water at 35°C is 0.0140. Therefore, when the temperature of water saturated and dissolved in air at 25°C is raised to 35°C, a theoretical value of a difference between the air dissolved in air saturated water at 25°C and air dissolved in air saturated water at 35°C is 2.5 mL per liter of water.

As a result of the evaluation, the amount of generated air was significantly increased in the samples of Examples 8-1 to 8-3 as compared with the sample of Comparative Example 8 (unprocessed). In the sample of Example 8-2, it was confirmed that 98% of the theoretical value of air became bubbles.

The above results are considered to be due to the difference in the structure of water in contact with the hydrophobic inner wall of the syringe. Supersaturated air is known to form flat nanobubbles on a hydrophobic solid surface. Compared with the sample of Comparative Example 8, it is considered that each of the samples of Examples 8-1 to 8-3 has a structure in which supersaturated gas molecules diffuse toward the hydrophobic solid surface, and the flat nanobubbles expand to easily become bubbles. The difference in this "structure" is considered to be the difference in the hydrogen bond network state of water described above.

It is considered that the sample (unprocessed water) of Comparative Example 8 has an ordered structure close to ice on the hydrophobic solid surface. It is considered that the portion of the ordered structure suppresses the gas dissolved in water from diffusing to the solid-liquid interface and expanding the nanobubbles.

Meanwhile, it is considered that the samples (processed water) of Examples 8-1 to 8-3 are unlikely to have an ordered structure close to ice on the hydrophobic solid surface. Therefore, it is considered that a factor that suppresses the diffusion of the gas dissolved in water to the solid-liquid interface is small, and as a result, the nanobubbles are likely to expand on the hydrophobic solid surface.

It is presumed that the above-mentioned difference in the "structure" of water is related to the smoothness of the mouthfeel of water. In addition, it was confirmed that the result of Fig. 5 lasted for 3 months or more from the sample preparation.

From the above results, it was confirmed that the present invention is useful.

[Reference Signs List]

10: Storage unit
11: Pipe
12: Liquid delivery pump
15: Temperature adjusting mechanism
20: Liquid delivery pump
30: Processor
40: Pressure adjustment valve (pressure control mechanism)
41: Pipe
42: Three-way valve
43: Pipe
50: Product tank
60: Heating unit (heating mechanism)
70: Cooling unit (cooling mechanism)
80: Stationary cleaning device
90: Control unit
100, 200: Manufacturing device

## Claims

1. A device for manufacturing a liquid product, comprising:

   a tubular processor provided in a liquid-tight manner;
   a liquid delivery pump which is connected to a first end side of the processor and is configured to cause a liquid material to flow into an inside of the processor; and
   a pressure control mechanism which is connected to a second end side of the processor and is configured to control a pressure of the liquid material flowing inside the processor to 1 MPa or more,
   wherein based on a volume of an internal space communicating from the liquid delivery pump to the pressure control mechanism, operating conditions of the liquid delivery pump are controlled so that a time required from when the liquid material flows into the internal space to when the liquid material is discharged via the pressure control mechanism is 3 seconds or more.

2. The device for manufacturing a liquid product according to Claim 1, further comprising:
a control unit that is configured to control the operating conditions.

3. The device for manufacturing a liquid product according to Claim 1 or 2,
wherein the liquid delivery pump does not have an accumulator.

4. The device for manufacturing a liquid product according to any one of Claims 1 to 3,
wherein the pressure control mechanism is a back pressure valve.

5. The device for manufacturing a liquid product according to any one of Claims 1 to 3,
wherein the pressure control mechanism is a homogenizing valve.

6. The device for manufacturing a liquid product according to any one of Claims 1 to 5, further comprising:

a storage unit that is connected to the liquid delivery pump and is configured to store the liquid material,
wherein the storage unit has a temperature adjusting mechanism that is configured to adjust a temperature of the liquid material.

7. The device for manufacturing a liquid product according to any one of Claims 1 to 6, further comprising:

a heating mechanism that is provided in a path on an upstream side of the liquid delivery pump with respect to the processor and heats the liquid material; and
a cooling mechanism that is provided in a path between the heating mechanism and the liquid delivery pump and cools the heated liquid material.

8. The device for manufacturing a liquid product according to any one of Claims 1 to 7, further comprising:
a stationary cleaning device that is configured to clean the inside of the processor.

9. A method for manufacturing a liquid product using the device for manufacturing a liquid product according to any one of Claims 1 to 8, comprising:
a step of causing the liquid material to continuously flow into the internal space and continuously discharging the liquid material from the internal space via the pressure control mechanism to obtain the liquid product.

FIG. 1

EP 3 841 888 A1

FIG. 2

## FIG. 3

## FIG. 4

FIG. 5

## INTERNATIONAL SEARCH REPORT

| International application No. |
| --- |
| PCT/JP2019/028126 |

**A. CLASSIFICATION OF SUBJECT MATTER**
Int.Cl. A23L2/00(2006.01)i, A23C7/00(2006.01)i, A23F3/16(2006.01)i, A23F5/24(2006.01)i, A47J31/46(2006.01)i, C12G1/00(2019.01)i, C12G3/00(2019.01)i
According to International Patent Classification (IPC) or to both national classification and IPC

**B. FIELDS SEARCHED**

Minimum documentation searched (classification system followed by classification symbols)
Int.Cl. A23L2/00, A23C7/00, A23F3/16, A23F5/24, A47J31/46, C12G1/00, C12G3/00

| Documentation searched other than minimum documentation to the extent that such documents are included in the fields searched | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)
CAplus/MEDLINE/EMBASE/BIOSIS/FSTA/WPIDS(STN), JSTPlus/JMEDPlus/JST7580(JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| X | JP 8-196249 A (SHOKUHIN SANGYO CHOKOATSU RIYOU GIJUTSU KENKYU KUMIAI) 06 August 1996, claims, examples, drawings (Family: none) | 1-9 |
| A | 角掛久美子 外，アイスクリームの製品特性に対する高圧処理の効 果，日本農芸化学会大会講演要旨集，2012, speech number: 2J17P12 (text), non-official translation (KAKUKAKE, Kumiko et al., Effect of high pressure treatment on product properties of ice cream, Proceedings of Annual Meeting of the Japanese Society for Agricultural Chemistry) | 1-9 |

☒ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 26.09.2019 | 08.10.2019 |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2019/028126

C (Continuation).    DOCUMENTS CONSIDERED TO BE RELEVANT

| Category* | Citation of document, with indication, where appropriate, of the relevant passages | Relevant to claim No. |
|---|---|---|
| P, X | WO 2019/004277 A1 (KYUSHU UNIVERSITY) 03 January 2019, claims, examples, drawings (Family: none) | 1-9 |

Form PCT/ISA/210 (continuation of second sheet) (January 2015)

**REFERENCES CITED IN THE DESCRIPTION**

**Patent documents cited in the description**

- JP 2018155611 A
- JP 3098639 B
- JP 2006042814 A